# EUROPÄISCHE PATENTSCHRIFT

(11) **EP 0 872 853 B1**
(45) Veröffentlichungstag und Bekanntmachung des Hinweises auf die Patenterteilung: **12.06.2002**
(21) Anmeldenummer: 98890090.8
(22) Anmeldetag: 31.03.1998
(51) Int. Cl.: H01C 1/082

(54) **Einrichtung zur Kühlung von Bremswiderständen für elektrisch angetriebene Fahrzeuge, insbesondere für Schienenfahrzeuge**
Cooling device for brake resistors of electrically driven vehicles, especially rail vehicles
Dispositif de refroidissement pour des résistances de freinage des véhicules, en particulier des véhicules ferroviaires

(30) Priorität: 03.04.1997 AT 56297
(43) Veröffentlichungstag der Anmeldung: 21.10.1998
(73) Patentinhaber: Bombardier Transportation GmbH, 13627 Berlin (DE)
(72) Erfinder: Weber, Gerhard, Ing., 2326 Maria Lanzendorf (AT)
(74) Vertreter: Sonn, Helmut

(56) Entgegenhaltungen:
- EP-A- 0 585 611
- DE-A- 2 743 036
- DE-A- 3 933 956

## Beschreibung

Die Erfindung betrifft eine Einrichtung zur Kühlung von Bremswiderständen für elektrisch angetriebene Fahrzeuge, insbesondere für Schienenfahrzeuge, unter Verwendung eines durch einen Kühlkörper mit Kühlkanälen zur Führung der Kühlflüssigkeit gebildeten Luft-Flüssigkeits-Wärmetauschers.

Die Abbremsung elektrisch angetriebenen Fahrzeugen wird durch mechanische oder elektrische Maßnahmen oder Kombinationen davon. erzielt. Zur mechanischen Abbremsung dienen z.B. Klotzbremsen, Scheibenbremsen oder andere mechanische oder hydraulische Systeme. Die bei der Bremsung frei werdende kinetische Energie wird bei mechanischen Systemen über die Reibung abgebaut. Auf elegantere Weise kann bei elektrisch angetriebenen Fahrzeugen die Bremsung auch elektrisch erfolgen. Dies wird z.B. durch einen Ankerkurzschluß des elektrischen Antriebes erzielt, wobei der Antriebsmotor in den Generatorbetrieb übergeht. Zur Begrenzung des Bremsmomentes dienen sogenannte Bremswiderstände, in welchen die Bremsenergie in Wärme umgewandelt wird. Mit moderneren Systemen ist es sogar möglich, die Energie in das Netz zurückzuspeisen, wobei trotzdem in jedem Fall Bremswiderstände notwendig sind, wenngleich die Dimensionierung derselben in letzteren Fall kleiner ausfallen kann. Um eine Überhitzung der Bremswiderstände und deren Umgebung zu vermeiden, muß die in den Bremswiderständen in Wärme umgewandelte elektrische Energie in geeigneter Weise abgeführt werden.

Bei bekannten Einrichtungen zur Kühlung von Bremswiderständen liegen die Bremswiderstände frei und werden direkt mit Luft umströmt und dadurch die Wärme abgeführt. Verschmutzungen in der Luft, wie z.B. Metallstaub, welcher insbesondere bei Schienenfahrzeugen vermehrt auftritt, führen zu Ablagerungen an den Widerständen, welche mit der Zeit anwachsen können. In der Folge können die Widerstände durch Überschläge zerstört werden. Zur Abhilfe kann die Kühlluft gefiltert werden, wodurch der Aufwand und somit die Kosten deutlich steigen. Eine andere Möglichkeit bietet die Ansaugung der Kühlluft über das Fahrzeugdach, wobei allerdings die Luftkanäle zu den üblicherweise im Unterflurbereich des Fahrzeuges befindlichen Bremswiderständen wiederum Platz im Fahrzeug beanspruchen.

Die Bremswiderstände sind starken Temperaturschwankungen ausgesetzt. So können im Widerstand bei einer Vollbremsung durchaus 500° C auftreten. Um die Umgebung der Widerstände, insbesondere den Fahrgastraum bei Fahrzeugen zur Personenbeförderung vor Überhitzung zu schützen, sind aufwendige thermische Isolationen der Bremswiderstände notwendig.

Häufig wird die in Wärme umgewandelte Bremsenergie für Heizzwecke verwendet. Im Falle einer Luftkühlung der Bremswiderstände kann die erwärmte Luft über Leitungen direkt in den Fahrgastraum geführt werden. Dies hat allerdings zur Folge, daß sehr hohe Temperaturschwankungen, abhängig von den Bremsmanövern auftreten. Somit sind aufwendige Regelvorrichtungen notwendig, mit welchen eine Überhitzung bzw. zu große Temperaturschwankungen im Fahrgastraum vermeidbar und eine relativ konstante Temperatur erzielbar ist.

In der EP 611 675 A1 wird beispielsweise ein Fahrzeug mit elektrischem Antrieb beschrieben, bei dem die Bremsenergie rückgewonnen wird und zum Laden von Akkumulatoren verwendet wird. Zur Kühlung des Bremswiderstandes ist ein Wärmetauscher in einem Kühlkreislauf angeordnet, der die Wärme an die Umgebung abgibt. Dieses Dokument gibt aber keinen Hinweis auf die konstruktive Ausgestaltung der Einrichtung zur Kühlung des Widerstandes.

Die DE 39 33 956 A1 zeigt die Anordnung eines zwangsgekühlten elektrischen Leistungswiderstands, der aus einem flachen, ebenen, metallischen Widerstandselement besteht, der auf einem Flüssigkeitskühlkörper aus einem elektrisch isolierenden aber gut wärmeleitenden Werkstoff, vorzugsweise Aluminiumnitrid, aufliegt. Das Dokument offenbart eine Konstruktion, bei der beidseitig der Leistungswiderstände Flüssigkeitskühlkörper angeordnet und mittels Spannstäben und Spannmuttern miteinander verbunden werden.

Die EP 585 611 A2 zeigt einen Leistungswiderstand mit Flüssigkeitskühlung, bei dem die Widerstandselemente über Isolierplatten zwischen zwei metallischen Flachgehäusen angeordnet sind, welche Kühlkanäle aufweisen.

Bei den Konstruktionen gemäß den zwei letztgenannten Dokumenten werden die Bremswiderstände zwischen Kühlkörpern angeordnet, wodurch einerseits eine aufwendige Bauweise und andererseits eine unzulängliche Wärmeabführung verbunden ist.

Die Aufgabe der Erfindung besteht daher darin, eine Einrichtung zur Kühlung von Bremswiderständen für elektrisch angetriebene Fahrzeuge, insbesondere für Schienenfahrzeuge zu schaffen, mit der die in den Bremswiderständen auftretende Wärme ohne großen Aufwand wirkungsvoll abgeführt werden kann. Die oben erwähnten Nachteile bekannter Einrichtungen sollen vermieden oder zumindest verringert werden. Gleichzeitig soll eine möglichst geringe Baugröße der Einrichtung realisierbar sein.

Gelöst wird die Aufgabe dadurch, daß der Kühlkörper einen gesonderten Hohlraum aufweist, in dem die Bremswiderstände angeordnet und von den Kühlkanälen umgeben sind. Die Wärme der Bremswiderstände wird an die Kühlflüssigkeit abgegeben und der Wärmetauscher überträgt die Wärme der Flüssigkeit zur Luft. Durch diese konstruktive Maßnahme kommen die widerstände bzw. das aktive Widerstandsmaterial nicht direkt mit der Luft in Berührung und wird somit von in der Luft befindlichen Partikeln nicht verunreinigt. Dadurch ist ein effizienter Übergang der Wärme der Bremswiderstände auf die Kühlflüssigkeit und eine Abgabe der Wärme der Flüssigkeit an die umgebende Luft möglich. Der Kühlkörper ermöglicht bei optimaler Dimensionierung einen Ausgleich der Temperaturschwankungen der Bremswiderstände, welche abhängig von den Bremsmanövern auftreten. Darüber hinaus ist Wasser ein weit besserer Wärmeleiter als Luft, wodurch eine bessere Kühlwirkung des Bremswiderstandes erzielt werden kann, was wiederum in einer kleineren Baugröße desselben bei gleicher Leistung resultiert. Ein weiterer Vorteil der erfindungsgemäßen Konstruktion sind die geringeren auftretenden Temperaturschwankungen. Im Gegensatz zur Luftkühlung treten keine extremen Temperaturspitzen auf, sondern sind die Schwankungen der Temperatur auf einen relativ engen Bereich begrenzt. Dadurch kann die von den Bremswiderständen abgeführte Wärmeenergie in geeigneter Weise zum Heizen des Fahrgastraumes eines Fahrzeuges zur Personenbeförderung ohne aufwendige Regelvorrichtungen verwendet werden. Darüber hinaus sind auch keine kostspieligen Maßnahmen zur thermischen Isolation der Bremswiderstände vom übrigen Fahrzeug erforderlich, da keine extremen Temperaturspitzen auftreten.

Vorteilhafterweise sind Öffnungen zum Einbringen der Bremswiderstände in den Hohlraum des Kühlkörpers, beispielsweise mit Silkon, verschlossen. Dadurch wird ein Eindringen von Feuchtigkeit in den Hohlraum verhindert.

Vorteilhafterweise wird die Kühlflüssigkeit durch ein Wasser-Glykol-Gemisch gebildet. Dies stellt eine kostengünstige Möglichkeit dar, wobei Glykol dem Wasser als Frost- und Rostschutzmittel beigefügt wird. Die Mengenverhältnisse hängen von den Bedingungen, unter welchen das Fahrzeug eingesetzt wird, ab. Üblicherweise werden 40% Frost- und Rostschutzmittel mit 60% Wasser vermischt.

Gemäß einer weiteren Ausführungsform der Erfindung sind die Bremswiderstände elektrisch isoliert, um eine elektrische Verbindung zu Teilen des Wärmetauschers, insbesondere des Kühlkörpers aus Sicherheitsgründen zu verhindern.

Vorzugsweise erfolgt die elektrische Isolation mit Keramik- . und/oder Glimmerplatten od. dgl. Diese Materialien weisen optimale dielektrische Eigenschaften auf.

Um einen guten Wärmeübergang von den Bremswiderständen zur Kühlflüssigkeit zu gewährleisten, sind die Bremswiderstände von einem Material mit hoher Wärmeleitfähigkeit, vorzugsweise von Aluminiumoxid Al₂O₃ umgeben. Als Folge eines besseren Wärmeübergangs vom Widerstandsmaterial zur Kühlflüssigkeit, kann gegenüber einem luftgekühlten Bremswiderstand das Widerstandsmaterial mit geringerem Querschnitt ausgeführt werden, was wiederum in einer geringeren Baugröße resultiert. Durch den guten Wärmeübergang wird erreicht, daß die Oberflächentemperatur der Bremswiderstände praktisch gleich der Wassertemperatur ist. Dadurch werden die bereits oben erwähnten Temperaturschwankungen gering gehalten.

Wenn die Kühlkanäle mit der Heizung des Fahrzeuges verbunden sind, kann in einfacher Weise eine Verwendung der von den Bremswiderständen herrührenden Wärmeenergie zur Heizung des Fahrgastraumes bei einem Fahrzeug zur Personenbeförderung verwendet werden. Da die Temperaturschwankungen nicht groß sind, brauchen keine aufwendigen Regelmechanismen oder thermische Isolationen vorgesehen werden.

Gemäß einer weiteren Ausführungsform der Erfindung sind die Kühlkanäle mit einem allenfalls vorhandenen Kühlkreislauf verbunden. Dadurch sind keine zusätzlichen Einrichtungen zur Förderung der Kühlflüssigkeit notwendig, sondern werden vorhandene Einrichtungen genützt. Solche sind bei elektrisch angetriebenen Fahrzeugen meist ohnedies, wie z.B. zur Kühlung der Wechselrichter od. dgl., vorhanden.

Vorzugsweise besteht der Kühlkörper aus Aluminium oder Aluminium-Legierungen. Diese Materialien sind gußtechnisch leicht verarbeitbar, weisen ein sehr geringes Gewicht, eine hohe Korrosionsbeständigkeit und eine hohe Wärmeleitfähigkeit auf.

Die Erfindung wird anhand eines Ausführungsbeispieles gemäß der beigefügten Zeichnungen näher erläutert.

Darin zeigen
- Fig. 1: einen vom erfindungsgemäßen Wärmetauscher umgebenen Bremswiderstand im Querschnitt,
- Fig. 2: eine Schnittbild des vom erfindungsgemäßen Wärmetauscher umgebenen Bremswiderstands von der Seite entlang der Schnittlinie II-II gemäß Fig. 1,
- Fig. 3: einen aus mehreren Einzelelementen zusammengesetzten von einem Kühlkörper umgebenen Bremswiderstand.

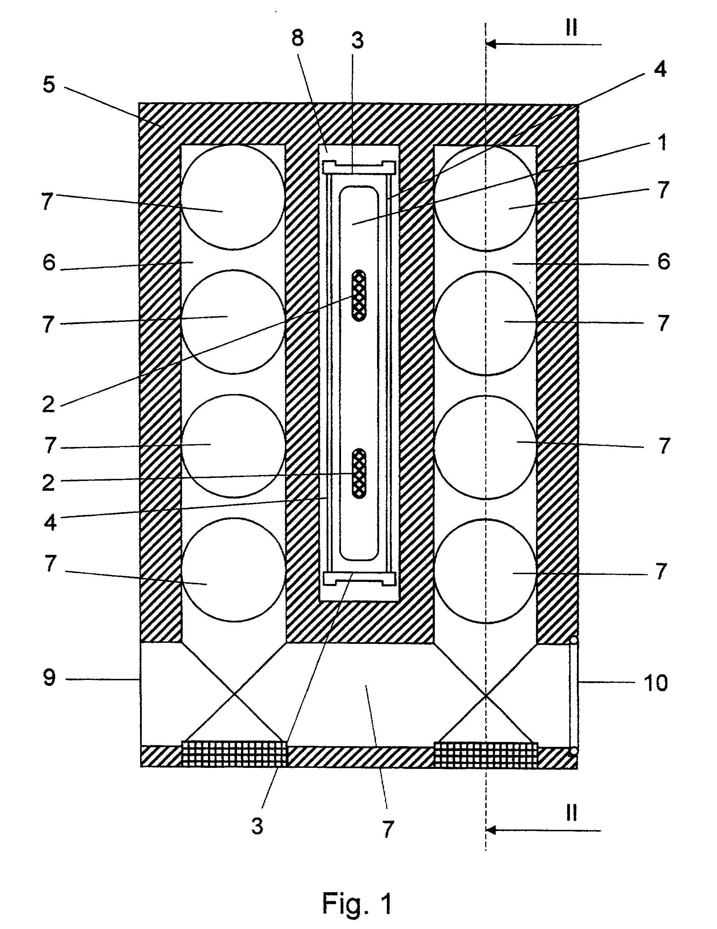

Die Anordnung gemäß Fig. 1 zeigt den eigentlichen Bremswiderstand 1, bestehend aus einem aktiven Widerstandsmaterial in Band- oder Drahtform, welches um einen Keramikträger gewickelt ist. Die elektrischen Anschlüsse 2 des Bremswiderstandes sind nach außen herausgeführt. Üblicherweise besteht das Widerstandsmaterial aus Chromnickel CrNi. Um den Kontakt zwischen dem spannungsführenden Widerstandsmaterial und der Umgebung zu verhindern, sind an den schmalen Seiten des Bremswiderstandes 1 Keramikplatten 3 angeordnet, welche Schienen aufweisen, in denen Glimmerplatten 4 befestigt sind, welche den elektrischen Schutz an den Längsseiten des Bremswiderstandes 1 gewährleisten. Der Bremswiderstand 1 samt elektrischer Isolation ist in einem Hohlraum 8 eines Kühlkörpers 5 angeordnet. Für einen besseren thermischen Übergang vom Bremswiderstand 1 auf den Kühlkörper 5 ist der Hohlraum 8 mit einem Material mit hoher Wärmeleitfähigkeit ausgefüllt. Dazu eignet sich beispielsweise Aluminiumoxid Al₂O₃ hervorragend. Gemäß der vorliegenden Konstruktion ist das aktive Widerstandsmaterial vollkommen abgeschlossen und somit vor Korrosion, wie es bei luftgekühlten, offenen Bremswiderständen vorkommt, geschützt. Die Stirnseiten des Hohlraumes 8 werden zur Verhinderung des Eindringens von Feuchtigkeit beispielsweise mit Silikon verschlossen. Der Kühlkörper 5 besteht vorzugsweise aus Aluminium oder Aluminium-Legierungen, da diese Materialien gußtechnisch hervorragende Eigenschaften aufweisen, darüber hinaus leicht sind, eine hohe Korrosionsbeständigkeit aufweisen und eine hohe Wärmeleitfähigkeit zeigen. Im dargestellten Beispiel ist der Kühlkörper 5 so angeordnet, daß um den Hohlraum 8, in welchem Bremswiderstand 1 angeordnet ist, zwei Räume 6 gebildet werden, in welchen Kühlkanäle 7 zur Führung der Kühlflüssigkeit angeordnet sind. Die Kühlkanäle 7 sind so angeordnet, daß sie eine optimale Abführung der Wärmeenergie vom Inneren des Kühlkörpers 5, also vom Bremswiderstand 1 gewährleisten und daß der Strömungswiderstand der Kühlflüssigkeit gering gehalten wird. Die Zu-/Abflußöffnungen 9 für das Kühlmedium sind vorzugsweise so angeordnet, daß eine Zusammenschaltung mehrerer dargestellter Einzelelemente leicht möglich ist. Nicht benötigte Öffnungen werden mit Verschlußstücken 10 abgedichtet.

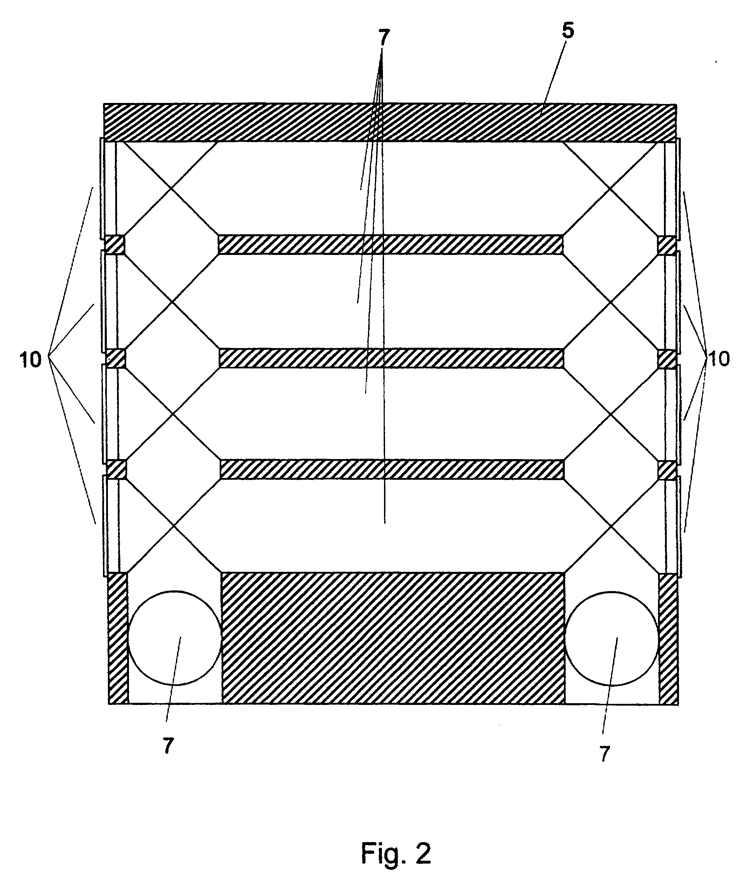

Fig. 2 zeigt ein Schnittbild des vom Wärmetauscher umgebenen Bremswiderstandes von der Seite entlang der Schnittlinie II-II gemäß Fig. 1. Die Kühlkanäle 7 werden durch Bohrungen im Kühlkörper 5 hergestellt. Damit die Kühlflüssigkeit im Kreislauf geführt werden kann, werden die herstellungsbedingten seitlichen Öffnungen der Kühlkanäle 7 durch Verschlußstücke 10 abgedichtet.

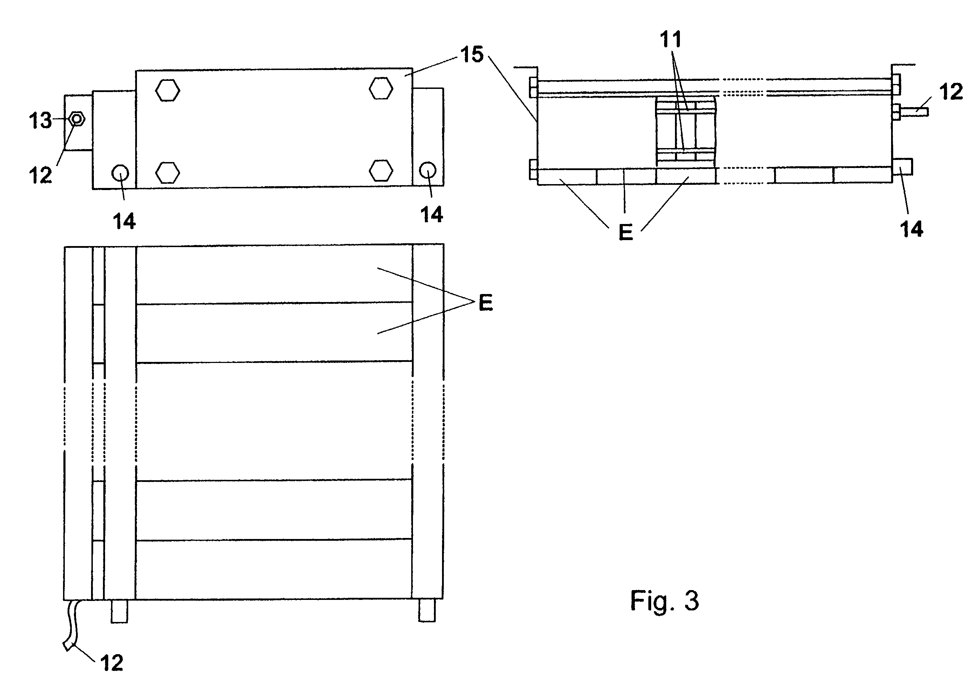

Fig. 3 zeigt die Zusammensetzung von mehreren Einzelelementen gemäß Fig. 1 und 2. Je nach erforderlicher Leistung werden mehrere vom Kühlkörper umgebene Bremswiderstände in Serie zusammengeschaltet. Wird der Strömungswiderstand der Kühlflüssigkeit zu hoch, wird anstelle der Serienschaltung eine Parallelschaltung vorgesehen. Die elektrischen Anschlüsse der einzelnen Bremswiderstände werden mit Hilfe von Verbindungskabel 11 miteinander verbunden. Ein gemeinsames Anschlußkabel 12 wird über einen Kabelkanal 13 nach außen geführt. Die Anordnung der einzelnen Elemente E erfolgt so, daß die einzelnen Zu-/Abflußöffnungen der Kühlkanäle aneinander angeordnet werden können. Am Ende der gesamten Anordnung werden die Kühlflüssigkeitszu-/abflüße 14 herausgeführt. Zweckmäßigerweise wird die Gesamtanordnung durch einen Montagewinkel 15 od. dgl. zusammengehalten.

Die Erfindung ist nicht auf das in den Abbildungen dargestellte Ausführungsbeispiel beschränkt. Die Kühlkanäle können auch auf andere Weise z.B. gußtechnisch hergestellt werden.

Ein wesentlicher Vorteil der vorliegenden Erfindung besteht darin, daß in vielen elektrisch angetriebenen Fahrzeugen, insbesondere Schienenfahrzeugen, Wasser für andere Zwecke bereits vorhanden ist und durch wenig Aufwand auch zur Kühlung der Bremswiderstände herangezogen werden kann. Darüber hinaus können die elektrischen Bremswiderstände auch zur Vorheizung verwendet werden, indem vor Antritt der Fahrt elektrische Energie in diese eingespeist wird und dadurch das Kühlwasser aufgewärmt wird, welches zur Heizung des Fahrgastraumes od. dgl. verwendet wird.

Obwohl hier hauptsächlich auf elektrisch angetriebene Schienenfahrzeuge eingegangen wird, ist die Anwendung der wassergekühlten Bremswiderstände auch für andere elektrische angetriebene Fahrzeuge, wie z.B. O-Busse oder Trolley-Busse möglich.

## Patentansprüche

1. Einrichtung zur Kühlung von Bremswiderständen für elektrisch angetriebene Fahrzeuge, insbesondere für Schienenfahrzeuge, unter Verwendung eines durch einen Kühlkörper (5) mit Kühlkanälen (7) zur Führung der Kühlflüssigkeit gebildeten Luft-Flüssigkeits-Wärmetauschers, **dadurch gekennzeichnet, dass** der Kühlkörper (5) einen gesonderten Hohlraum (8) aufweist, in dem die Bremswiderstände (1) angeordnet und von den Kühlkanälen (7) umgeben sind.

2. Einrichtung nach Anspruch 1, **dadurch gekennzeichnet, dass** Öffnungen zum Einbringen der Bremswiderstände (1) in den Hohlraum (8) des Kühlkörpers (5) beispielsweise mit Silikon verschlossen sind.

3. Einrichtung nach Anspruch 2, **dadurch gekennzeichnet, dass** die Kühlflüssigkeit, durch ein Wasser/Glykolgemisch gebildet ist.

4. Einrichtung nach mindestens einem der Ansprüche 1 bis 3, **dadurch gekennzeichnet, dass** die Bremswiderstände (1) elektrisch isoliert sind.

5. Einrichtung nach Anspruch 4, **dadurch gekennzeichnet, dass** die elektrische Isolation der Bremswiderstände (1) mit Keramikund/oder Glimmerplatten (3, 4) erfolgt.

6. Einrichtung nach mindestens einem der Ansprüche 1 bis 5, **dadurch gekennzeichnet, dass** die Bremswiderstände (1) von einem Material mit hoher Wärmeleitfähigkeit, vorzugsweise von Aluminiumoxid Al₂O₃ umgeben sind.

7. Einrichtung nach mindestens einem der Ansprüche 2 bis 6, **dadurch gekennzeichnet, dass** die Kühlkanäle (7) mit der Heizung des Fahrzeuges verbunden sind.

8. Einrichtung nach mindestens einem der Ansprüche 2 bis 7, **dadurch gekennzeichnet, dass** die Kühlkanäle (7) mit einem allenfalls vorhandenen Kühlkreislauf verbunden sind.

9. Einrichtung nach mindestens einem der Ansprüche 2 bis 8, **dadurch gekennzeichnet, dass** der Kühlkörper (5) aus Aluminium oder Aluminium-Legierungen besteht.

## Claims

1. An arrangement for cooling brake resistors for electrically driven vehicles, in particular for rail vehicles, using an air-liquid heat exchanger formed by a cooling body (5) comprising cooling channels (7) for guiding the coolant, **characterised in that** the cooling body (5) comprises a separate cavity (8) in which the brake resistors (1) are arranged and surrounded by the cooling channels (7).

2. An arrangement according to claim 1, **characterised in that** the openings for introducing the brake resistors (1) in the cavity (8) of the cooling body (5) are closed, e.g. by silicone.

3. An arrangement according to claim 2, **characterised in that** the coolant is formed by a water/glycol mixture.

4. An arrangement according to at least one of claims 1 to 3, **characterised in that** the brake resistors (1) are electrically insulated.

5. An arrangement according to claim 4, **characterised in that** the electric insulation of the brake resistors (1) is effected by ceramic and/or mica plates (3, 4).

6. An arrangement according to at least one of claims 1 to 5, **characterised in that** the brake resistors (1) are surrounded by a material having a high heat conductivity, preferably by aluminum oxide, Al₂O₃.

7. An arrangement according to at least one of claims 2 to 6, **characterised in that** the cooling channels (7) are connected with the heating system of the vehicle.

8. An arrangement according to at least one of claims 2 to 7, **characterised in that** the cooling channels (7) are connected with an optionally present coolant circulation.

9. An arrangement according to at least one of claims 2 to 8, **characterised in that** the cooling body (5) is made of aluminum or aluminum alloys.

## Revendications

1. Dispositif de refroidissement de résistances de freinage pour des véhicules à commande électrique, notamment pour des véhicules sur rails, avec utilisation d'un échangeur de chaleur air/liquide formé par un corps formant refroidisseur (5) comportant des passages de refroidissement (7) pour le guidage du fluide de refroidissement, **caractérisé en ce que** le corps formant refroidisseur (5) présente une cavité (8) séparée dans laquelle sont placées les résistances de freinage (1) et qui est entourée par les passages de refroidissement (7).

2. Dispositif selon la revendication 1, **caractérisé en ce que** des ouvertures, prévues pour la mise en place des résistances de freinage (1) à l'intérieur de la cavité (8) du corps formant refroidisseur (5), sont obturées, par exemple par de la silicone.

3. Dispositif selon la revendication 2, **caractérisé en ce que** le fluide de refroidissement est constitué par un mélange d'eau et de glycol.

4. Dispositif selon au moins l'une des revendications 1 à 3, **caractérisé en ce que** les résistances de freinage (1) sont électriquement isolées.

5. Dispositif selon la revendication 4, **caractérisé en ce que** l'isolement électrique des résistances de freinage (1) est effectué par des plaquettes en céramique et/ou en mica (3, 4).

6. Dispositif selon au moins l'une des revendications 1 à 5, **caractérisé en ce que** les résistances de freinage (1) sont entourées par un matériau présentant une conductibilité thermique élevée, de préférence par de l'oxyde d'aluminium Al₂O₃.

7. Dispositif selon au moins l'une des revendications 2 à 6, **caractérisé en ce que** les passages de refroidissement (7) sont reliés au système de chauffage du véhicule.

8. Dispositif selon au moins l'une des revendications 2 à 7, **caractérisé en ce que** les passages de refroidissement (7) sont reliés à un circuit de refroidissement au mieux déjà présent.

9. Dispositif selon au moins l'une des revendications 2 à 8, **caractérisé en ce que** le corps formant refroidisseur (5) consiste en de l'aluminium ou en des alliages d'aluminium.
